# EUROPÄISCHE PATENTSCHRIFT

(11) **EP 2 349 805 B1**
(45) Veröffentlichungstag und Bekanntmachung des Hinweises auf die Patenterteilung: **09.03.2016**
(21) Anmeldenummer: 09784044.1
(22) Anmeldetag: 16.10.2009
(51) Int. Cl.: B60W 50/08, B62D 5/04, B62D 6/00, B62D 7/15, B60T 8/1755, B60W 30/00

(54) **VERFAHREN ZUR STEUERUNG EINES KRAFTFAHRZEUGS UND VORRICHTUNG HIERFÜR**
METHOD FOR CONTROLLING A MOTOR VEHICLE, AND DEVICE THEREFOR
PROCÉDÉ DE COMMANDE D'UN VÉHICULE AUTOMOBILE ET DISPOSITIF CORRESPONDANT

(30) Priorität: 21.10.2008 DE 102008043016
(43) Veröffentlichungstag der Anmeldung: 03.08.2011
(73) Patentinhaber: Continental Teves AG & Co. oHG, 60488 Frankfurt (DE)
(72) Erfinder: STÄHLIN, Ulrich, 65670 Eschborn (DE); DIEBOLD, Jürgen, 65760 Eschborn (DE)
(74) Vertreter: Bonn, Roman Klemens
(86) Internationale Anmeldenummer: PCT/EP2009/063561
(87) Internationale Veröffentlichungsnummer: WO 2010/046315

(56) Entgegenhaltungen:
- EP-A1- 1 355 209
- WO-A1-2005/063523
- WO-A1-2007/107360

## Beschreibung

Die vorliegende Erfindung betrifft ein Verfahren zur Steuerung eines Kraftfahrzeugs, wobei die Steuerung unter Beteiligung mindestens eines Fahrerassistenzsystems erfolgt. Die Erfindung betrifft ferner eine entsprechende Vorrichtung.

Steuerungen für Kraftfahrzeuge nach dem heutigen Stand der Technik werden häufig unter Beteiligung von sogenannten Fahrerassistenzsystemen (Advanced Driver Assistance Systems, ADAS) durchgeführt. Dies sind Einrichtungen, welche den Fahrer eines Kraftfahrzeugs in bestimmten Fahrsituationen unterstützen. Beispiele für derartige Fahrerassistenzsysteme sind der Abstandsregeltempomat (Adaptive Cruise Control, ACC), das Antiblockiersystem (ABS), das elektronische Stabilitätsprogramm (ESP), der adaptive Fernlichtassistent (automatische Anpassung der Leuchtweite des Abblendlichts und Auf- und Abblenden des Fernlichtes), der Bremsassistent (BRS), die Berganfahrhilfe, der Tempomat, der Abstandswarner, die Totwinkel-Überwachung, der Stauassistent, das Spurenerkennungssystem, der Spurwechselassistent (Lane Change Assistant), die Fahrerzustandserkennung (Driver State Detection), das Kollisionswarn- und Schutzsystem (Collision Mitigation (Brake) System, CM(B)S) oder die Verkehrszeichenerkennung (Traffic Sign Recognition).

Die Unterstützung des Fahrers durch ein Fahrerassistenzsystem erfolgt meist aufgrund von Sicherheitserwägungen oder zur Steigerung des Fahrkomforts. Fahrerassistenzsysteme greifen meist autonom in Antrieb, Lenkung und/oder Signalisierungseinrichtungen des Fahrzeugs ein.

WO 2007/107360 A1 oder EP 1 355 209 A1 beschreibein ein Verfahren nach dem Oberbegriff des Anspruchs 1.

Typischerweise kann heute der Eingriff eines Fahrerassistenzsystems in Antrieb, Lenkung und/oder Signalisierungseinrichtungen dadurch überstimmt werden, dass der Fahrer deutlich erkennbar gegen den Eingriff des ADAS arbeitet. Hierbei wird unter "Überstimmung" oder übersteuerung" eine Handlung verstanden, die den Eingriff des Fahrerassistenzsystems verhindert oder zumindest verändert. Die Möglichkeit der Überstimmung erfolgt aus rechtlichen Überlegungen, da der Fahrer jederzeit die Verantwortung für die Führung seines Kraftfahrzeugs haben muss. Ferner arbeiten einige Systeme noch nicht so zuverlässig. Dies betrifft insbesondere die Umfelderkennung unter allen möglichen Fahrzuständen und Wetterbedingungen. Zudem ist die Akzeptanz von Systemen höher, welche den Fahrer nicht "entmündigen".

Die Möglichkeiten der Überstimmung eines Fahrerassistenzsystems sind derzeit allerdings begrenzt bzw. schwer von Handlungen des Fahrers zu unterscheiden, die kein Übersteuern eines Fahrerassistenzsystems bezwecken sollen.

Bei der Arbeit eines Kollisionswarn- und Schutzsystems würde beispielsweise ein deutliches Beschleunigen nach erfolgter Warnung als Übersteuerung des Systems interpretiert werden. Der Eingriff des Systems würde in der Steuerung abgebrochen werden. Die Beschleunigung des Fahrzeugs könnte jedoch auch aufgrund eines Erschreckens des Fahrers erfolgt sein, so dass in diesem Fall die Überstimmung des Systems ungewollt erfolgte.

Zudem besteht bei einer Zunahme der Fahrerassistenzsysteme an Bord eines Kraftfahrzeugs die Gefahr, dass Handlungen des Fahrers hinsichtlich eines Fahrerassistenzsystems falsch interpretiert werden oder dem falschen Fahrerassistenzsystem zugeordnet werden. Auch hierdurch kann es zu ungewollten Überstimmungen des Systems kommen.

Ein weiterer Nachteil bekannter Überstimmungsmöglichkeiten für Fahrerassistenzsysteme ist, dass die Überstimmung nicht differenziert erfolgen kann. Häufig besteht nur die Möglichkeit, den Eingriff des Systems auszuschalten. Die Stärke des Eingriffs kann beispielsweise durch heutige Überstimmungsvarianten nicht reduziert werden.

Die Aufgabe der vorliegende Erfindung besteht somit darin, ein Verfahren anzugeben, das die Überstimmung eines Fahrerassistenzsystems für den Fahrer erleichtert, dieses differenzierter gestalten lässt und in ihrer Genauigkeit verbessert. Die Aufgabe besteht ferner darin, eine entsprechende Vorrichtung zu schaffen.

Die obige Aufgabe wird gelöst durch ein Verfahren, bei dem durch Betätigung eines in und/oder an dem Kraftfahrzeug vorgesehenen, mit dem mindestens einen Fahrerassistenzsystem kommunizierenden Betätigungsmittels durch den Fahrer die Beteiligung mindestens eines Teils des mindestens einen Fahrerassistenzsystems an der Steuerung des Kraftfahrzeugs abgeschaltet oder verändert wird.

Der Vorteil des erfindungsgemäßen Verfahrens besteht darin, dass dem Fahrer durch die Betätigungsmittel sehr einfache und differenzierbare Möglichkeiten gegeben werden, in die Arbeit eines Fahrerassistenzsystems einzugreifen oder dieses zu überstimmen. Dem Fahrer wird über diverse Betätigungsmittel (HMI (Human Machine Interaction)-Elemente, siehe Ausführungsbeispiele) die Möglichkeit gegeben, Eingriffe des ADAS zu überstimmen oder diese auf andere Weise zu beeinflussen. Diese zusätzlichen Möglichkeiten der Überstimmung können mit den heute gebräuchlichen Möglichkeiten kombiniert werden. Ferner können auch verschiedene Betätigungsmittel miteinander kombiniert werden.

Es ist der Verdienst der Erfinder, erkannt zu haben, dass moderne Fahrzeuge eine Vielzahl an Betätigüngsmitteln für. Fährerwünsche bereitstellen, die jedoch für die Überstimmung von Fahrerassistenzsystemen bisher nicht genutzt werden. Diese Mittel können nun in ihrer gesamten Vielfalt für die Beeinflussung der Arbeit der Fahrerassistenzsysteme genutzt werden.

Beispielsweise kann ein Fahrerassistenzsystem mittels eines Betätigungsmittels nicht nur abgeschaltet, sondern beispielsweise alternativ auch in einen anderen Modus umgeschaltet werden. So könnte eine Stellung oder Position des Betätigungsmittels bedeuten, dass ein Modus des Fahrerassistenzsystems eingeschaltet wird, in dem interne Größen des Fahrerassistenzsystems angezeigt werden, z.B. die aktuelle Gefahreneinschätzung bei einem Kollisionswarn- und Schutzsystem oder eine Bird-View (Ansicht von oben) der aktuellen Situation bei einem Spurwechselassistenten. Die zuletzt genannten Möglichkeiten können beispielsweise dazu verwendet werden, Fahrschüler besser zu unterrichten und/oder sie schneller an das System zu gewöhnen. Das erfindungsgemäße Verfahren kann jedoch auch dazu dienen, sich schneller mit einem neuen Fahrzeug vertraut zu machen oder besser zu verstehen, wie das System funktioniert. Dies hat den Vorteil, dass die Akzeptanz des Systems höher wird, da sich der Fahrer dem System nicht "ausgeliefert" vorkommt sondern es beeinflussen kann.

In einem anderen Beispiel für eine Modusumschaltung erfolgt ein Umschalten vom Modus "Spurverlassen-Warnung" zum Modus "Spurhaltung", also von Warnung zu Aktion durch das jeweilige Fahrerassistenzsystem. Allgemein bedeutet "Umschalten in einen anderen Modus", dass ein Fahrerassistenzsystem innerhalb der Steuerung des Kraftfahrzeugs von einer Handlungs- bzw. Reaktionsweise in eine andere versetzt wird. Folglich wird bei einer Modusumschaltung die Beteiligung mindestens eines Teils des mindestens einen Fahrerassistenzsystems an der Steuerung des Kraftfahrzeugs verändert.

Über das Betätigungsmittel kann ein Fahrerassistenzsystem auch derart konfiguriert werden, dass es verschieden "aggressiv" reagiert. Dies bedeutet, dass der Zeitpunkt des Eingriffs des Fahrerassistenzsystems verändert wird. Dadurch kann das ADAS an die Gewohnheiten des Fahrers angepasst werden.

Ist nicht klar, welches ADAS auf das Bedienelement reagieren sollte, so kann entweder festgelegt werden, dass alle in dem jeweiligen Fahrzeug vorhandene Fahrerassistenzsysteme reagieren, oder es kann bestimmt werden, dass im Falle des Überstimmens nur das Fahrerassistenzsystem reagiert, bei dem auch andere Methoden (z.B. starkes Beschleunigen, Lenken anstelle Geradeausfahrt bzw. andere Abbruchkriterien) gerade wirksam werden würden.

Das oder die Betätigungselemente können auch derart ausgebildet sein, dass ringförmig zwischen den jeweiligen Modi eines Fahrerassistenzsystems oder mehrerer in dem jeweiligen Kraftfahrzeug verbauten Fahrerassistenzsystemen umgeschaltet werden kann. Alternativ oder zusätzlich kann das Umschalten mit einem Auswahlrad etc. kombiniert werden.

Insgesamt ist das Betätigungselement in einer bevorzugten Ausführungsform der vorliegenden Erfindung derart ausgebildet, dass es sowohl die Beteiligung mindestens eines. Fahrerassistenzsystems oder mehrerer Fahrerassistenzsysteme verändern oder abschalten kann. Von Vorteil ist, wenn das Betätigungselement abhängig von der Fahrsituation eine der beiden Aufgaben erfüllt. Als Fahrsituation wird in diesem Zusammenhang beispielsweise die Unterscheidung Stadt/Landstraße/Autobahn oder hohe/mittlere/niedrige Geschwindigkeit oder einspurig/mehrspurig/mehrspurig mit abgetrennter Gegenfahrbahn oder Pendelstrecke/Einzelstrecke oder andere Umgebungsparameter verstanden.

Hierbei beinhaltet die Veränderung der Beteiligung des jeweiligen Fahrerassistenzsystems, dass bei Betätigung des Betätigungsmittels das Maß der Beteiligung mindestens eines Teils des Fahrerassistenzsystems an der Steuerung des Kraftfahrzeugs verändert wird (z.B. ein Moduswechsel vollzogen wird) und/oder die Art und/oder der Umfang der Fahrerinteraktion und/oder der Fahrerinformation des Fahrerassistenzsystems verändert wird. Dies kann beispielsweise auch beinhalten, dass dem Fahrer durch eine entsprechende Anzeige weitere Hilfsmittel zur Steuerung des Kraftfahrzeugs zur Verfügung gestellt werden. Ein solches Hilfsmittel kann z.B. in der Anzeige interner Größen des Fahrerassistenzsystems bestehen, so dass dem Fahrer weitere Entscheidungsmöglichkeiten oder Möglichkeiten zur richtigen Beurteilung der Fahrsituation geboten werden.

Insbesondere kann das erfindungsgemäße Verfahren derart eingerichtet sein, dass, wenn das Fahrzeug sich gerade nicht in einem Zustand befindet, der überstimmt werden kann oder muss, bevorzugt das Maß der Beteiligung des ADAS an der Steuerung des Kraftfahrzeugs verändert und in allen anderen Fällen das Fahrerassistenzsystem abgeschaltet wird.

In einem bevorzugten Ausführungsbeispiel des erfindungsgemäßen Verfahrens wird als Betätigungsmittel ein Bedienelement betätigt, vorzugsweise ein Pedal, ein Joystick, ein Rad, ein Taster und/oder eine Schaltwippe. Diese Betätigungsmittel lassen sich kostengünstig für ein Kraftfahrzeug realisieren und können durch den Fahrer einfach und meist intuitiv bedient werden.

Insbesondere kann bei der Verwendung eines Pedals als Betätigungselement ein solches anstelle des Kupplungspedals vorgesehen werden, da ein Kupplungspedal bei Kraftfahrzeugen mit Automatikgetriebe, Doppelkupplungsgetriebe oder automatisiertem Schaltgetriebe oder bei Hybridfahrzeugen, die immer häufiger von den Kunden gewünscht werden, entfällt. Eines solches Betätigungselement muss daher nicht grundlegend neu gestaltet werden.

Alternativ oder zusätzlich kann die Betätigung eines Betätigungsmittels durch eine durch den Fahrer erzeugte sprachliche und/oder mimische Mitteilung erfolgen. Eine solche Betätigung eines Betätigungsmittels hat den Vorteil, dass sie die Aufmerksamkeit des Fahrers nicht von der Fahrbahn absenkt. Ferner lässt dieses Betätigungsmittel eine sehr differenzierte Betätigung und somit auch eine differenzierte Überstimmung des jeweiligen Fahrerassistenzsystems zu.

In dem erfindungsgemäßen Verfahrens erfolgt die Betätigung des Betätigungsmittels in Form einer von der Lenkbewegung verschiedenen Bewegung des Lenkrads. Eine solche Betätigung erfolgt meist intuitiv.

Die obige Aufgabe wird ferner durch eine Vorrichtung zur Steuerung eines Kraftfahrzeugs gelöst, bei der ein Betätigungsmittel in und/oder am Kraftfahrzeug vorgesehen ist, welches mit dem mindestens einen Fahrerassistenzsystem kommuniziert, wobei das mindestens eine Fahrerassistenzsystem derart eingerichtet ist, dass bei Betätigung des Betätigungsmittels durch den Fahrer die Beteiligung mindestens eines Teils des mindestens einen Fahrerassistenzsystems an der Steuerung des Kraftfahrzeugs abschaltbar oder veränderbar ist.

Die erfindungsgemäße Vorrichtung und die in den abhängigen Ansprüchen angegebenen bevorzugten Ausführungsformen dieser weisen die oben im Zusammenhang mit dem erfindungsgemäßen Verfahren angegebenen Vorteile auf.

Weitere Merkmale, Vorteile und Anwendungsmöglichkeiten der vorliegenden Erfindung ergeben sich auch aus der nachfolgenden Beschreibung von Ausführungsbeispielen des erfindungsgemäßen Verfahrens und der erfindungsgemäßen Vorrichtung anhand einer Figur.

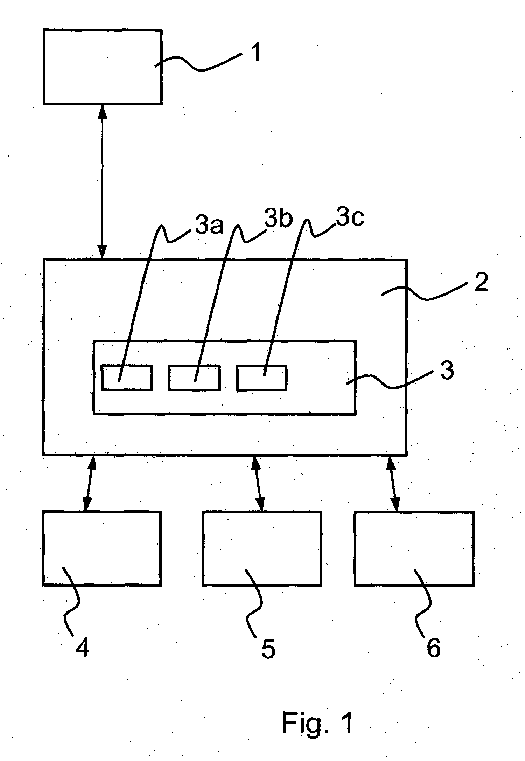

Es zeigt
- Figur 1: ein Ausführungsbeispiel einer erfindungsgemäßen Vorrichtung.

In einem ersten Ausführungsbeispiel der Erfindung kann als Betätigungselement ein anstelle eines Kupplungspedals vorgesehenes Pedal (linkes Pedal, im Folgenden ADAS-Pedal genannt) 1 verwendet werden. Dieses Pedal dient nun dazu, Eingriffe eines oder mehrerer in dem jeweiligen Kraftfahrzug eingebauter Fahrerassistenzsysteme zu überstimmen. Hierfür ist das Pedal 1 mit der Steuereinrichtung 2 des Kraftfahrzeugs verbunden. In Kraftfahrzeugen, in denen ein Kupplungspedal gebraucht wird, kann ein Pedal auch an einer anderen Stelle des Kraftfahrzeugs vorgesehen werden. Eine mögliche und günstige Stelle wäre in diesem Fall z.B. links vom Kupplungspedal.

Solch ein ADAS-Pedal kann zusätzlich mit den bisher verwendeten Methoden zur Überstimmungserkennung kombiniert werden, um das Verfahren noch sicherer zu machen.

Idealerweise wird das ADAS-Pedal 1 so ausgeführt, dass es sich in seiner Ruhepositiön und seinem Pedalweg sowie seiner Pedalcharakteristik deutlich von einem Kupplungspedal unterscheidet, um die Umstellung bei einem Umstieg von einem Kraftfahrzeug mit Kupplungspedal in ein Kraftfahrzeug mit ADAS-Pedal 1 so klein wie möglich zu halten. Beispielsweise könnte ein solches ADAS-Pedal schwergängiger sein und einen kleineren Arbeitsweg aufweisen, als ein Kupplungspedal. Gegebenenfalls kann ein nicht dargestellter Freigabemechanismus vorgesehen sein, mittels dem der Fahrer das A-DAS-Pedal 1 erst freigibt (ähnlich einer Parkbremse), bevor es eingesetzt werden kann. Hierdurch wird die Fehlerrate beim Einsatz des ADAS-Pedals 1 reduziert.

In einer bevorzugten Ausführungsform könnte das ADAS-Pedal 1 in der Form eines Knopfes am Bodenblech realisiert werden.

Wird ein Kollisionswarn- und Schutzsystem 3a als eines von mehreren Fahrerassistenzsystemen 3 verwendet, welche in die Steuereinrichtung 2 integriert sind, so kann die Situation entstehen, dass das System 3a den Fahrer mittels einer Anzeigeeinrichtung vor einer drohenden Kollision warnt. Der Fahrer fährt jedoch sehr sportlich und erkennt eine Lücke, die er zum Ausweichen nutzen kann. Daher betätigt er das Bedienelement (z.B. das ADAS-Pedal 1), um das Kollisionswarn- und Schutzsystem 3a zu überstimmen und verhindert anschließend den Unfall durch ein Ausweichmanöver. In diesem Fall erkennt die Steuereinrichtung 2 durch Kommunikation mit dem ADAS-Pedal 1, dass durch die Betätigung des Pedals 1 das Kollisionswarn- und Schutzsystem 3a überstimmt werden soll. Die Steuereinrichtung 2 gibt demnach keine weiteren Meldungen über die Anzeige 4 aus und leitet auch keine Bremsung mittels des Bremssystems 5 ein. Auch die Lenkung 6 wird von der Steuereinrichtung 2 nicht über das normale Maß hinaus bzw. nur zur Unterstützung des Ausweichvorgangs beeinflusst.

Weitere Fahrerassistenzsysteme 3, die in die Steuerung 2 integriert sein können, sind beispielsweise ein Parkassistent 3b und ein Spurwechselassistent 3c.

In einem zweiten Ausführungsbeispiel der vorliegenden Erfindung kann der Fahrer über eine Mimikerkennung und/oder eine Spracherkennung die in dem Kraftfahrzeug eingebauten Fahrerassistenzsysteme 3 beeinflussen. Vor allem die Spracherkennung erleichtert dabei auch die Zuordnung zu einem der Systeme, beispielsweise den Parkassistenten 3b, da dieses sprachlich benannt werden kann, in dem genannten Fall beispielsweise mit "Parkassistent". Bei diesem Ausführungsbeispiel ist daher das Betätigungselement (anstelle des Pedals 1) für die Mimikerkennung als Kamera und Bilderkennungssystem bzw. für die Spracherkennung als Empfänger und Spracherkennungssystem ausgebildet.

In der Erfindung kann als Betätigungselement (anstelle des Pedals 1) ein drucksensitives Lenkrad eingesetzt werden. Um die Änderung des Drucks auf das Lenkrad zu detektieren, wird ein kapazitiv arbeitender Sensor verwendet. Wird an dem Lenkrad eine nicht schreckhafte Änderung des Drucks festgestellt, so wird dies als Überstimmungswunsch interpretiert. Für differenzierte Einstellung des Eingriffs in ein Fahrerassistenzsystem ist ein drucksensitives Lenkrad jedoch nur bedingt verwendbar. Dieses Ausführungsbeispiel kann daher vorteilhaft mit dem nachfolgend beschriebenen vierten Ausführungsbeispiel kombiniert werden.

Beim vierten Ausführungsbeispiel der vorliegenden Erfindung ist über ein Lenkrad, das in mehreren Ebenen (z.B. in zwei Ebenen) verstellbar ist (Lenkradkranz-Abstand zum Fahrer), als Betätigungselement und/oder über einen Hebel/Ring hinter dem Lenkrad, der in mehreren Ebenen verstellbar ist, als Betätigungselement (jeweils anstelle des Pedals 1) die Charakteristik des jeweiligen ADAS 3a, 3b, 3c dadurch verstellbar, dass jeweils in eine andere Ebene gewechselt wird. So könnte beispielsweise eine erste Ebene (nahe am Fahrer) ein defensives/komfortables Verhalten des Fahrerassistenzsystems mit entsprechend frühen Warnungen/Eingriffen, eine zweite Ebene (Mittelstellung) ein neutrales Verhalten und eine dritte Ebene (am weitesten weg vom Fahrer) ein aggressives/dynamisches Verhalten mit späten Warnungen/Eingriffen beinhalten. Das Ausführungsbeispiel ist aber nicht auf drei Ebenen beschränkt oder festgeschrieben und auch die Reihenfolge im Bezug zum Fahrer kann umgekehrt werden. Alternativ oder zusätzlich können über eine solche Änderung der Ebene Eingriffe übersteuert werden. Besonders vorteilhaft ist dieses Ausführungsbeispiel für Fahrerassistenzsysteme verwendbar, welche die Lenkung des Kraftfahrzeugs beeinflussen.

In einem fünften Ausführungsbeispiel der Erfindung kann mittels eines zentralen Joysticks als Betätigungselement (anstelle des Pedals 1) für den Eingriff in Fahrerassistenzsysteme (im Folgenden ADAS-Joystick genannt) z.B. zwischen frühen, d.h. komfortablen, bzw. späten, d.h. aggressiven, Eingriffen in das jeweils ausgewählte Fahrerassistenzsystem 3a, 3b, 3c unterschieden werden. Ebenso können mit einem ADAS-Joystick sehr leicht Parameter des jeweiligen ADAS 3a, 3b, 3c angepasst werden. Beispielsweise kann die Bremsstärke bei dem Kollisionswarn- und Schutzsystem 3a eingestellt werden. Zum Überstimmen ist der ADAS-Joystick jedoch nur dann geeignet, wenn er entsprechend leicht zu erreichen ist und im engsten Betätigungskreis des Fahrers angeordnet ist.

In einem sechsten Ausführungsbeispiel können über einfache Bedienelemente, wie z.B. Lenkradtasten oder Schaltwippen, (anstelle des Pedals 1) Eingriffe von Fahrerassistenzsystemen 3a, 3b, 3c überstimmt werden und/oder die jeweiligen im Fahrzeug eingebauten Fahrerassistenzsysteme 3a, 3b, 3c hinsichtlich der Parameter an die Bedürfnisse des Fahrers angepasst werden. Um für eine Überstimmung eines ADAS 3a, 3b, 3c verwendbar zu sein, müssen diese Bedienelemente entsprechend leicht erreichbar und im engsten Betätigungsfeld des Fahrers angeordnet sein.

Im Folgenden werden drei weitere Beispiele dargestellt, wie die oben geschilderten Betätigungselemente bei der Steuerung eines Kraftfahrzeugs mit mindestens einem Fahrerassistenzsystem 3a, 3b, 3c konkret eingesetzt werden können. Hierbei kann ggf. jedes der oben beschriebenen Betätigungselemente verwendet werden.

Bei dem Spurwechselassistent (Lane Change Assistent) 3c wird nach Betätigen eines Bedienelements, z.B. durch Drücken eines Lenkradtasters (evtl. bis zum nächsten Drücken des Tasters), (anstelle des Pedals 1) die aktuelle Position relativ zu den Fahrstreifen mittels der Anzeigeeinrichtung 4 als Bird-View angezeigt. Dadurch kann der Fahrer in engen Situationen besser manövrieren.

Bei einem Kollisionswarn- und Schutzsystem 3a wird nach einer Spracheingabe, z.B. Aussprechen von "ADAS-Anzeige", bei Normalfahrt durch die Anzeigeeinrichtung 4 der jeweils aktuelle Gefahrenlevel angezeigt. Zusätzlich kann angezeigt werden, welches Objekt im Umfeld das gerade relevante Objekt oder das gefährlichste Objekt ist.

Bei einem Spurwechselassistent 3c erfolgt nach Betätigung eines Bedienelements (z.B. einer Ebenenumschaltung am Lenkrad) eine Umschaltung von dem Modus, in dem bei Verlassen der Fahrspur lediglich gewarnt wird, auf den Spurhaltungs-Modus, in dem das Fahrzeug automatisch innerhalb der Fahrspur, z.B. durch Lenkeingriffe, gehalten wird.

## Patentansprüche

1. Verfahren zur Steuerung eines Kraftfahrzeugs, wobei die Steuerung unter Beteiligung mindestens eines Fahrerassistenzsystems (3a, 3b, 3c) erfolgt, wobei durch Betätigung eines in und/oder an dem Kraftfahrzeug vorgesehenen, mit dem mindestens einen Fahrerassistenzsystem kommunizierenden Betätigungsmittels (1) durch den Fahrer die Beteiligung mindestens eines Teils des mindestens einen Fahrerassistenzsystems (3a,3b,3c) an der Steuerung des Kraftfahrzeugs abgeschaltet oder verändert wird,
**dadurch gekennzeichnet,**
**dass** die Betätigung des Betätigungsmittels in Form einer von der Lenkbewegung verschiedenen Bewegung des Lenkrads erfolgt, wobei hierzu eine nicht schreckhafte Änderung des Druckes auf dem drucksensitiven Lenkrad über einen Kapazitiv arbeitenden Sensor festgestellt wird.

2. Verfahren nach Anspruch **1, dadurch gekennzeichnet, dass** als Betätigungsmittel ein Bedienelement betätigt wird, vorzugsweise ein Pedal (1), ein Joystick, ein Rad, ein Taster und/oder eine Schaltwippe.

3. Verfahren nach einem der vorhergehenden Ansprüche, **dadurch gekennzeichnet, dass** die Betätigung des Betätigungsmittels durch eine durch den Fahrer erzeugte sprachliche und/oder mimische Mitteilung erfolgt.

4. Verfahren nach einem der vorhergehenden Ansprüche, **dadurch gekennzeichnet, dass** bei Betätigung des Betätigungsmittels (1) das Maß der Beteiligung mindestens eines Teils des mindestens einen Fahrerassistenzsystems (3a,3b,3c) an der Steuerung des Kraftfahrzeugs verändert wird.

5. Verfahren nach einem der vorhergehenden Ansprüche, **dadurch gekennzeichnet, dass** die Beteiligung mindestens eines Teils des mindestens einen Fahrerassistenzsystems (3a,3b,3c) an der Steuerung des Kraftfahrzeugs dadurch verändert wird, dass dem Fahrer durch eine entsprechende Anzeige weitere Hilfsmittel zur Steuerung des Kraftfahrzeugs zur Verfügung gestellt werden.

6. Vorrichtung zur Steuerung eines Kraftfahrzeugs, welche unter automatischer Beteiligung mindestens eines Fahrerassistenzsystems (3a,3b,3c) arbeitet, ein Betätigungsmittel (1) in und/oder am Kraftfahrzeug vorgesehen ist, welches mit dem mindestens einen Fahrerassistenzsystem (3a,3b,3c) kommuniziert, wobei das mindestens eine Fahrerassistenzsystem (3a,3b,3c) derart eingerichtet ist, dass bei Betätigung des Betätigüngsmittels (1) durch den Fahrer die Beteiligung mindestens eines Teils des mindestens einen Fahrerassistenzsystems (3a,3b,3c) an der Steuerung des Kraftfahrzeugs abschaltbar oder veränderbar ist,
**dadurch gekennzeichnet,**
**dass** das Betätigungsmittel als Lenkrad ausgebildet ist, wobei die Betätigung in Form einer von der Lenkbewegung verschiedenen Bewegung des Lenkrads erfolgt und eine nicht schreckhafte Änderung des Druckes auf dem drucksensitiven Lenkrad über einen Kapazitiv arbeitenden sensor festgestellt wird.

7. Vorrichtung nach Anspruch 6, **dadurch gekennzeichnet, dass** das Betätigungsmittel als Bedienelement, vorzugsweise als Pedal (1), Joystick, Rad, Taster und/oder Schaltwippe ausgebildet ist.

8. Vorrichtung nach einem der Ansprüche 6 bis 7, **dadurch gekennzeichnet, dass** das Betätigungsmittel als Spracherkennung und/oder Mimikerkennung ausgebildet ist.

9. Vorrichtung nach einem der Ansprüche 6 bis 8, **dadurch gekennzeichnet, dass** das mindestens eine Fahrerassistenzsystem (3a,3b,3c) derart eingerichtet ist, dass bei Betätigung des Betätigungselements (1) das Maß der Beteiligung mindestens eines Teils des mindestens einen Fahrerassistenzsystems (3a,3b,3c) an der Steuerung des Kraftfahrzeugs veränderbar ist

10. Vorrichtung nach einem der Ansprüche 6 bis 9, **dadurch gekennzeichnet, dass** das mindestens eine Fahrerassistenzsystem (3a, 3b, 3c) derart eingerichtet ist, dass die Beteiligung mindestens eines Teils des mindestens eine Fahrerassistenzsystems (3a,3b,3c) an der Steuerung des Kraftfahrzeugs dadurch veränderbar ist, dass dem Fahrer durch eine entsprechende, von einer Anzeigeeinrichtung (4) ausgegebene Anzeige weitere Hilfsmittel zur Steuerung des Kraftfahrzeugs zur Verfügung gestellt werden.

## Claims

1. Method for controlling a motor vehicle, wherein the control is carried out with the participation of at least one driver assistance system (3a, 3b, 3c), wherein the participation of at least part of the at least one driver assistance system (3a, 3b, 3c) in the control of the motor vehicle is switched off or changed by the driver activating an activation means (1) which is provided in and/or on the motor vehicle and communicates with the at least one driver assistance system, **characterized in that** the activation of the activation means takes the form of a movement of the steering wheel which is different from the steering movement, wherein for this purpose a non-startling change in the pressure is detected at the pressure-sensitive steering wheel by means of a capacitively operating sensor.

2. Method according to Claim 1, **characterized in that** an operator control element, preferably a pedal (1), a joystick, a wheel, a pushbutton key and/or a switching rocker, is activated as the activation means.

3. Method according to one of the preceding claims, **characterized in that** the activation means is activated by a voice communication and/or mimic communication which is generated by the driver.

4. Method according to one of the preceding claims, **characterized in that**, when the activation means (1) is activated, the degree of participation of at least part of the at least one driver assistance system (3a, 3b, 3c) in the control of the motor vehicle is changed.

5. Method according to one of the preceding claims, **characterized in that** the participation of at least part of the at least one driver assistance system (3a, 3b, 3c) in the control of the motor vehicle is changed by virtue of the fact that further resources for controlling the motor vehicle are made available to the driver by means of a corresponding display.

6. Device for controlling a motor vehicle which operates with automatic participation of at least one driver assistance system (3a, 3b, 3c), wherein an activation means (1) is provided in and/or on the motor vehicle, which activation means (1) communicates with the at least one driver assistance system (3a, 3b, 3c), wherein the at least one driver assistance system (3a, 3b, 3c) is configured in such a way that, when the activation means (1) is activated by the driver, the participation of at least part of the at least one driver assistance system (3a, 3b, 3c) in the control of the motor vehicle can be switched off or changed, **characterized in that** the activation means is embodied as a steering wheel, wherein the activation takes the form of a movement of the steering wheel which is different from the steering movement and a non-startling change in the pressure is detected at the pressure-sensitive steering wheel by means of a capacitively operating sensor of the steering wheel.

7. Device according to Claim 6, **characterized in that** the activation means is embodied as an operator control element, preferably as a pedal (1), joystick, wheel, pushbutton key and/or switching rocker.

8. Device according to Claim 6 to 7, **characterized in that** the activation means is embodied as a voice recognition system and/or mimic recognition system.

9. Device according to one of Claims 6 to 8, **characterized in that** the at least one driver assistance system (3a, 3b, 3c) is configured in such a way that, when the activation element (1) is activated, the degree of participation of at least part of the at least one driver assistance system (3a, 3b, 3c) in the control of the motor vehicle can be changed.

10. Device according to one of Claims 6 to 9, **characterized in that** the at least one driver assistance system (3a, 3b, 3c) is configured in such a way that the participation of at least part of the at least one driver assistance system (3a, 3b, 3c) in the control of the motor vehicle can be changed by virtue of the fact that further resources for controlling the motor vehicle are made available to the driver by means of a corresponding display which is output by a display device (4).

## Revendications

1. Procédé de commande d'un véhicule automobile, la commande s'effectuant avec participation d'au moins un système (3a, 3b, 3c) d'assistance à la conduite, dans lequel, par l'actionnement par le conducteur d'un moyen (1) d'actionnement prévu dans et/ou sur le véhicule automobile et communiquant avec le au moins un système d'assistance à la conduite, la participation d'au moins une partie du au moins un système (3a, 3b, 3c) d'assistance à la conduite à la commande du véhicule automobile est interrompue ou modifiée,
**caractérisé**
**en ce que** l'actionnement du moyen d'actionnement s'effectue sous la forme d'un déplacement, différent du déplacement de conduite, du volant, une modification, non peureuse, de la pression sur le volant sensible à la pression étant fixée à cet effet par un capteur capacitif.

2. Procédé suivant la revendication 1, **caractérisé en ce qu'**on actionne, comme moyen d'actionnement, un élément de commande, de préférence une pédale (1), un levier, une roue, une touche et/ou une bascule de commutation.

3. Procédé suivant l'une des revendications précédentes, **caractérisé en ce que** l'actionnement des moyens d'actionnement s'effectue par une instruction par la voix et/ou par la physionomie produite par le conducteur.

4. Procédé suivant l'une des revendications précédentes, **caractérisé en ce que**, lors de l'actionnement du moyen (1) d'actionnement, la mesure dans laquelle au moins une partie du au moins un système (3a, 3b, 3c) d'assistance à la conduite participe à la commande du véhicule automobile est modifiée.

5. Procédé suivant l'une des revendications précédentes, **caractérisé en ce que** la participation d'au moins une partie du au moins un système (3a, 3b, 3c) d'assistance à la conduite à la commande du véhicule automobile est modifiée par le fait qu'il est mis à la disposition du conducteur, par un affichage adéquat, d'autres moyens auxiliaires de commande du véhicule automobile.

6. Dispositif de commande d'un véhicule automobile, qui fonctionne avec participation automatique d'au moins un système (3a, 3b, 3c) d'assistance à la conduite, il est prévu un moyen d'actionnement dans et/ou sur le véhicule automobile, qui communique avec le au moins un système (3a, 3b, 3c) d'assistance à la conduite, le au moins un système (3a, 3b, 3c) d'assistance à la conduite étant conçu de manière à ce que, lors de l'actionnement du moyen (1) d'actionnement par le conducteur, la participation d'au moins une partie du au moins un système (3a, 3b, 3c) d'assistance à la conduite à la commande du véhicule automobile puisse être interrompue ou modifiée,
**caractérisé**
**en ce que** le moyen d'actionnement est sous la forme d'un volant, l'actionnement s'effectuant sous la forme d'un mouvement, différent du mouvement de conduite, du volant et une modification, non peureuse, de la pression sur le volant sensible à la pression étant fixée par un capteur capacitif.

7. Dispositif suivant la revendication 6, **caractérisé en ce que** le moyen d'actionnement est constitué sous la forme d'un élément de commande, de préférence sous la forme d'une pédale (1), d'un levier, d'une roue, d'une touche et/ou d'une bascule de commutation.

8. Dispositif suivant l'une des revendications 6 à 7, **caractérisé en ce que** le moyen d'actionnement est constitué sous la forme d'une reconnaissance de la parole et/ou d'une reconnaissance de la physionomie.

9. Dispositif suivant l'une des revendications 6 à 8, **caractérisé en ce que** le au moins un système (3a, 3b, 3c) d'assistance à la conduite est conçu de manière à ce que, lorsque l'élément (1) d'actionnement est actionné, la mesure dans laquelle au moins une partie du au moins un système (3a, 3b, 3c) d'assistance à la conduite participe à la commande du véhicule automobile peut être modifiée.

10. Dispositif suivant l'une des revendications 6 à 9, **caractérisé en ce que** le au moins un système (3a, 3b, 3c) d'assistance à la conduite est conçu de manière à ce que la participation d'au moins une partie du au moins un système (3a, 3b, 3c) d'assistance à la conduite à la commande du véhicule automobile peut être modifiée par le fait qu'il est mis à disposition du conducteur, par un affichage adéquat émis par un dispositif (4) d'affichage, d'autres moyens auxiliaires de commande du véhicule automobile.
